# EUROPÄISCHE PATENTSCHRIFT

(11) **EP 1 437 266 B1**
(45) Veröffentlichungstag und Bekanntmachung des Hinweises auf die Patenterteilung: **22.03.2006**
(21) Anmeldenummer: 03027452.6
(22) Anmeldetag: 01.12.2003
(51) Int. Cl.: B60R 21/20

(54) **Gassackmodul**
Airbag module
Module de coussin gonflable

(30) Priorität: 08.01.2003 DE 20300170 U
(43) Veröffentlichungstag der Anmeldung: 14.07.2004
(60) Teilanmeldung: 05014150.6
(73) Patentinhaber: TRW Automotive Safety Systems GmbH, 63743 Aschaffenburg (DE)
(72) Erfinder: Keutz, Markus, 64380 Rossdorf (DE); Helmstetter, Matthias, 63743 Aschaffenburg (DE); Magoley, Marcus, Dr., 63739 Aschaffenburg (DE)
(74) Vertreter: Sulzbach, Werner

(56) Entgegenhaltungen:
- WO-A-03/062023
- DE-A- 10 036 759
- DE-A- 19 904 072
- US-A- 5 125 682
- US-A1- 2001 052 691
- US-B2- 6 409 209

## Beschreibung

Die Erfindung betrifft ein Gassackmodul gemäß dem Oberbegriff des Anspruchs 1.

Die DE 100 36 759 A1 zeigt eine gattungsgemäße Insassenschutzvorrichtung mit einem Gassackmodul, bei dem eine zentrale Abdeckplatte eine Austrittsöffnung des Gassacks in einem Modulgehäuse abdeckt, wobei die Abdeckplatte fest mit einem verschiebbaren Teleskoprohr eines teleskopierbaren Diffusors verbunden ist. Nach der Aktivierung des Gassackmoduls löst sich die Abdeckplatte vom Modulgehäuse und bewegt sich bis zu einem Anschlag des Teleskoprohres, zusammen mit dem verschiebbaren Teleskoprohr, auf den Insassen zu.

In der US 5,125,682 A ist ein Gassackmodul dargestellt, bei dem, nach der Auslösung des Gassacks, die Bewegung einer Abdeckplatte in Richtung des Insassen von Haltebändern begrenzt wird. Die Haltebänder können dabei als Federn oder gebogene Stahlbänder ausgeführt sein und somit zu einem Abbau der Bewegungsenergie eines Insassen beitragen.

Die US 2001/0052691 A1 offenbart eine Gassack-Rückhalteeinrichtung, bei der Verbindungsmittel zwischen einem Gasgenerator und einem zentralen Bereich einer Modulabdeckung vorgesehen sind, die nach einer Auslösung des Gassacks den zentralen Bereich der Modulabdeckung so zurückhalten, daß eine Bewegung in Richtung des Insassen verhindert wird. In einer Ausführungsform sind die Verbindungsmittel so ausgebildet, daß sie die Bewegungsenergie des Insassen bei einem Sekundäraufprall wenigstens teilweise absorbieren.

Eine Ausführungsform in der US 6,409,209 B2 zeigt ein Gassackmodul, bei dem eine Modulabdeckung über ein Halteband (z.B. ein Gurtband eines Sicherheitsgurts) an einen Gasgenerator gekoppelt ist. Beim Aufblasen des Gassacks bewegt sich die Modulabdeckung relativ zum Gasgenerator auf einen Insassen zu, wobei die Bewegung der Modulabdeckung durch die Länge des Haltebands begrenzt ist.

Aus der DE 199 04 072 A1 ist ein Gassackmodul mit einer Modulabdeckung und einem ringförmigen Gassack bekannt, der durch einen Ringspalt um die geöffnete Abdeckung herum trichterförmig in Richtung auf den Fahrzeuginsassen hin aufblasbar ist. Es ist nur eine geringfügige Bewegung der gesamten Modulabdeckung aus dem Modul heraus in Richtung des Insassen (Entfaltungsrichtung) erlaubt, wobei diese Bewegung so klein ist, daß der Insasse nicht mit der Abdeckung in Kontakt kommen kann.

Durch die Erfindung soll die Endposition der Modulabdeckung bei Entfaltung des Gassacks sicher festgelegt werden, das Öffnen und die Entfaltung des Gassacks verbessert werden und der Gassack eine definierte Endposition einnehmen.

Die Erfindung schafft ein Gassackmodul mit einem Gasgenerator, einem mit dem Gasgenerator in Strömungsverbindung stehenden Gassack, einer den Gassack überdeckenden Modulabdeckung mit einem nach dem Öffnen der Modulabdeckung separaten, mittigen Teil und einer Halteeinrichtung für den mittigen Teil, wobei die Halteeinrichtung Führungsmittel aufweist, die beim Aufblasen des Gassacks eine Verschiebung des mittigen Teils erlauben und die Verschiebung des mittigen Teils begrenzen, wobei die Halteinrichtung ein plastisch verform bares Deformations mittel als Abstandselement aufweist, das bei eine Bewegung des mittigen Teils infolge einen Zündung des Grasgenanators bleiband deformient wird.

Durch das erfindungsgemäße Gassackmodul wird erreicht, daß nach dem Öffnen der Modulabdeckung nur noch das nun separate mittige Teil eine Bewegung auf den Fahrzeuginsassen hin ausführt, während die übrigen Teile der Modulabdeckung im wesentlichen ortsfest bleiben oder vom Fahrzeuginsassen wegbewegt werden. Damit wird auch für Fahrzeuginsassen, die sich in einer OOP-Situation (OOP = out of position) befinden, die Wahrscheinlichkeit von einem Teil der Modulabdeckung getroffen zu werden, noch einmal deutlich reduziert. Ist unter dem mittigen Teil und über der Halteeinrichtung ein Gassackabschnitt festgelegt, so kann der Gassackabschnitt beim Aufblasen des Gassacks den mittigen Teil der Modulabdeckung so weit verschieben, wie es die Führungsmittel erlauben. Durch die definierte Endposition der Abdeckung bzw. des mittigen Teils kann femer die Entfaltung des Gassacks so kontrolliert werden, daß auch in einer OOP-Situation noch eine sichere Rückhaltewirkung erreichbar ist

Gemäß einer Ausführungsform der Erfindung umfassen die Führungsmittel wenigstens ein mit dem mittigen Teil verbundenes Stiftelement.

Gemäß der Erfindung weist die Halteeinrichtung als plastisch deformierbare Bauteile gebildete Deformationsmittel auf. Solche Deformationsmittel können sowohl die Verschiebung des mittigen Teils der Modulabdeckung bewirken als auch diese wirksam begrenzen.

In weiteren Ausführungsformen kann das Deformationsmittel entweder unter mechanischer Einwirkung oder unter mechanischer und thermischer Einwirkung deformiert werden. Es ist so möglich, Deformationsmittel je nach Art des Gasgenerators im Hinblick auf den steigenden Gasdruck oder auf die steigende Temperatur der Verbrennungsprodukte aus dem Gasgenerator auszulegen.

Der mittige Teil ist bevorzugt so ausgebildet, daß er ein Fahrzeugemblem trägt. In diesem Fall wird das Loslösen des Emblems von dem mittigen Teil der Abdeckung aufgrund der Bewegungsbegrenzung sicher verhindert und die Verletzungsgefahr für den Fahrzeuginsassen deutlich reduziert.

Weitere Merkmale und Vorteile der Erfindung ergeben sich aus der nachfolgenden Beschreibung und aus den nachfolgenden Zeichnungen auf die Bezug genommen wird. In den Zeichnungen zeigen:
- Figuren la und b eine nicht erfindungsgemäße Ausführungsform des Gassackmoduls im Bereich der Halteeinrichtung, und

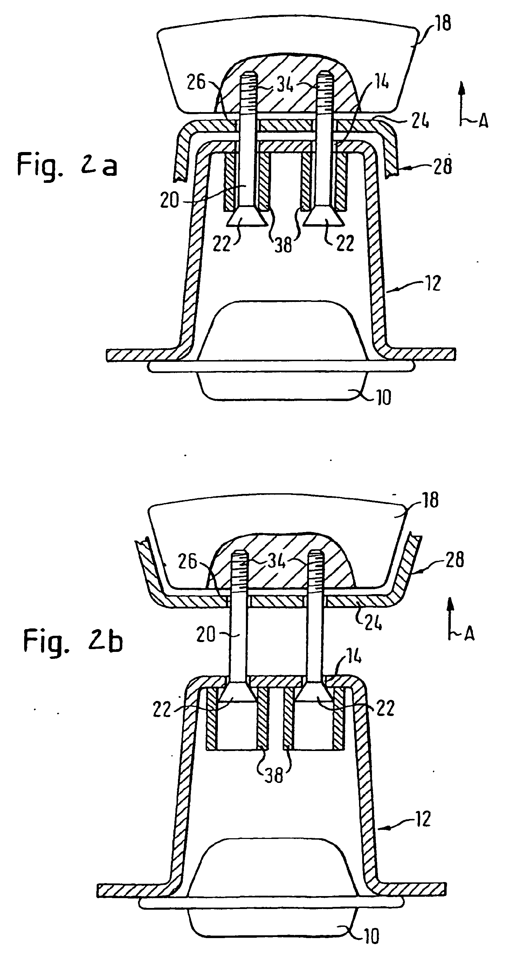

- Figuren 2a und b eine Ausführungsform des erfindungsgemäßen Gassackmoduls im Bereich der Halteeinrichtung.

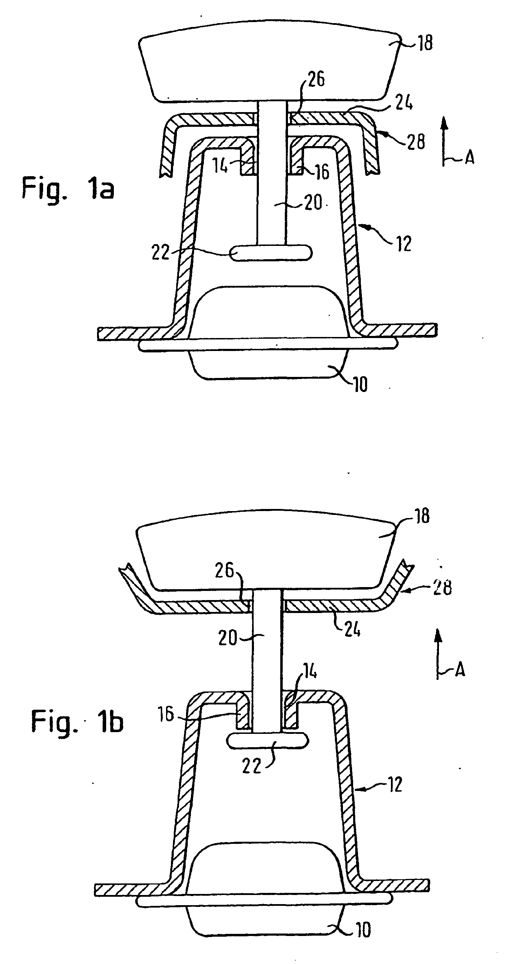

In den Figuren 1a und b ist ein Ausschnitt aus einem Gassackmodul dargestellt, welches in einem nicht dargestellten Fahrzeuglenkrad untergebracht ist. Das Gassackmodul weist einen Gasgenerator 10 auf, an dem eine Halteeinrichtung 12, die im wesentlichen becherförmig ausgeführt ist, angeordnet ist. An dem vom Gasgenerator 10 abgewandten Ende der Halteeinrichtung 12 befindet sich eine Öffnung 14, an die ein Hülsenelement 16 einstückig mit der Halteeinrichtung 12 angeformt ist, wobei sich das Hülsenelement von der Öffnung in Richtung auf den Gasgenerator hin erstreckt. Weiter ist ein separater, mittiger Teil 18 einer (nicht weiter dargestellten) Modulabdeckung gezeigt. Der mittige Teil kann im Betriebszustand in üblicher Weise unter Ausbildung einer vorbestimmten Aufreißlinie an die restliche Modulabdeckung angeformt sein. Der mittige Teil 18 ist fest mit einem Stiftelement 20 verbunden, wobei das Stiftelement auf der dem Gasgenerator zugewandten Seite des mittigen Teils der Modulabdeckung liegt und durch das Hülsenelement 16 hindurch in die Halteeinrichtung 12 hineinragt. An dem dem Gasgenerator zugewandten Ende des Stiftelements 20 befindet sich ein scheibenförmiger Stiftendabschnitt 22, dessen Außendurchmesser größer ist als der Außendurchmesser des Hülsenelements. Öffnung 14, Hülsenelement 16 und Stiftelement 20 mit dem Stiftendabschnitt 22 dienen als Führungsmittel. Zwischen der Halteeinrichtung 12 und dem mittigen Teil 18 der Modulabdeckung befindet sich ein Abschnitt 24 eines Gassacks 28. Der Gassack 28 weist im Bereich des Abschnitts 28 eine Gassacköffnung 26 auf, durch die das Stiftelement 20 hindurchgeführt ist und so den Gassackabschnitt bezogen auf den Gasgenerator 10 in lateraler Richtung fixiert.

In Figur la ist der Ruhezustand bei nicht aktiviertem Gassack dargestellt, wobei der mittige Teil 18 so am Gassackabschnitt 24 anliegt, daß er diesen gegen die Halteeinrichtung 12 drückt. Figur 1b zeigt das Gassackmodul bei aufgeblasenem Gassack mit dem von der Halteeinrichtung beabstandeten, mittigen Teil 18 der Modulabdeckung.

Sobald ein Unfall detektiert wird, strömt aus dem Gasgenerator 10 Gas in den zunächst gefalteten Gassack 28 ein und beginnt diesen aufzublasen. Beim Öffnen der Modulabdeckung wird der mittige Teil 18 von den übrigen Teilen der Modulabdeckung getrennt und vom Gassack 28 im Bereich des Gassackabschnitts 24 in eine axiale Richtung A vom Gasgenerator 10 weg bewegt. Anders ausgedrückt heißt dies, daß sich der mittige Teil 18 dabei auf den Fahrzeuginsassen zu bewegt. Durch die Führung des Stiftelements 20 im Hülsenelement 16 ist sichergestellt, daß der mittige Teil 18 nicht seitlich ausweichen kann. Erreicht der Stiftendabschnitt 22 das untere Ende des Hülsenelements 16, so wird die Bewegung des mittigen Teils 18 auf den Fahrzeuginsassen hin gestoppt. Die Querschnittsform von Stiftelement 20 und Hülsenelement 16 kann je nach Bedarf zylindrisch, quaderförmig, konisch oder als irgendein anderes geeignetes Profil ausgelegt sein.

In einer in den Figuren 2a und 2b dargestellten Ausführungsform eines Ausschnitts des Gassackmoduls ist an dem Gasgenerator 10 die becherförmige Halteeinrichtung 12 befestigt, die Öffnungen 14 aufweist. An den Öffnungen 14 sind als Deformationsmittel wirkende Abstandselemente 38 so angeordnet, daß sie sich in Richtung auf den Gasgenerator 10 hin erstrecken. Der mittige Teil 18 der Modulabdeckung ist über Gewindeabschnitte 34 mit Stiftelementen 20 verbunden, die an dem dem Gasgenerator 10 zugewandten Ende Stiftendabschnitte 22 aufweisen. Die Stiftendabschnitte 22 sind in dieser Ausführungsform konusförmig, wobei sich der Konus zum Gasgenerator 10 hin erweitert und der maximale Durchmesser des Stiftendabschnitts in etwa gleich dem Außendurchmesser des Abstandselements ist. Zwischen der Halteeinrichtung 12 und dem mittigen Teil 18 ist der Gassackabschnitt 24 angeordnet und weist Öffnungen 26 auf, durch die Stiftelemente 20 hindurchtreten und so den Gassack in lateraler Richtung fixieren.

In der in Figur 2a gezeigten Ruhestellung liegt der mittige Teil 18 im wesentlichen am Gassackabschnitt 24 und an der Halteeinrichtung 12 an. Die konischen Stiftendabschnitte 22 ragen gerade noch aus den Abstandselementen 38 heraus. Wird der Gasgenerator gezündet und der vorher gefaltete Gassack 28 aufgeblasen, so übt der Gassackabschnitt 24 eine Kraft in Richtung A auf den mittigen Teil 18 aus. Der mittige Teil 18 nimmt hierbei die Stiftelemente 20 und die Stiftendabschnitte 22 mit, wodurch die Stiftendabschnitte 22 die Abstandselemente 38 durch Aufweitung bleibend deformieren. Bei Anschlag der Stiftendabschnitte 22 an dem dem Gasgenerator 10 abgewandten Bodenbereich der Halteeinrichtung 12 wird die Bewegung des mittigen Teils 18 der Modulabdeckung gestoppt. Der nun erreichte Endzustand bei aufgeblasenem Gassack ist in Figur 2b dargestellt. Die Deformation der Abstandselemente 38 kann sowohl allein aufgrund mechanischer Kräfte als auch durch die Kombination mechanischer und thermischer Einwirkung auf die Abstandselemente beim Freisetzen der Gase aus dem Gasgenerator erfolgen.

## Patentansprüche

1. Gassackmodul mit einem Gasgenerator (10), einem mit dem Gasgenerator in Strömungsverbindung stehenden Gassack (28), einer den Gassack überdeckenden Modulabdeckung mit einem nach dem Öffnen der Modulabdeckung separaten, mittigen Teil (18) und einer Halteeinrichtung (12) für den mittigen Teil, wobei die Halteeinrichtung Führungsmittel (14,20,22) aufweist, die beim Aufblasen des Gassacks (28) eine Verschiebung des mittigen Teils (18) erlauben und die Verschiebung des mittigen Teils (18) begrenzen, **dadurch gekennzeichnet, daß** die Halteeinrichtung (12) ein plastisch verformbares Deformationsmittel als Abstandselement (38) aufweist, das bei einer Bewegung des mittigen Teils (18) infolge einer Zündung des Gasgenerators (10) bleibend deformiert wird.

2. Gassackmodul nach Anspruch 1, **dadurch gekennzeichnet, daß** unter dem mittigem Teil (18) und über der Halteeinrichtung (12) ein Gassackabschnitt (24) festgelegt ist.

3. Gassackmodul nach einem der vorhergehenden Ansprüche, **dadurch gekennzeichnet, daß** die Führungsmittel so gebildet sind, daß beim Aufblasen des Gassacks (28) der mittige Teil (18) im wesentlichen in einer Richtung auf einen Insassen zu verschoben wird.

4. Gassackmodul nach einem der vorhergehenden Ansprüche, **dadurch gekennzeichnet, daß** die Führungsmittel wenigstens ein mit dem mittigen Teil (18) verbundenes Stiftelement (20) aufweisen.

5. Gassackmodul nach einem der vorhergehenden Ansprüche, **dadurch gekennzeichnet, daß** das Deformationsmittel unter mechanischer Einwirkung deformiert wird.

6. Gassackmodul nach einem der vorhergehenden Ansprüche, **dadurch gekennzeichnet, daß** das Deformationsmittel unter thermischer Einwirkung deformiert wird.

7. Gassackmodul nach einem der vorhergehenden Ansprüche, **dadurch gekennzeichnet, daß** der mittige Teil (18) ein Emblem aufweist.

## Claims

1. A gas bag module comprising a gas generator (10), a gas bag (28) in fluid communication with the gas generator, a module covering which covers the gas bag and has a central part (18) that is separate after opening of the module covering, and a holding device (12) for the central part, the holding device having guide means (14, 20, 22) which during inflation of the gas bag (28) permit a displacement of the central part (18) and limit the displacement of the central part (18), **characterized in that** the holding device (12) has a plastically deformable deformation means as a spacer element (38) which is permanently deformed upon a movement of the central part (18) as a result of an activation of the gas generator (10).

2. The gas bag module according to Claim 1, **characterized in that** a gas bag section (24) is secured under the central part (18) and above the holding device (12).

3. The gas bag module according to either of the preceding claims, **characterized in that** the guide means are formed such that during inflation of the gas bag (28) the central part (18) is displaced substantially in a direction towards an occupant.

4. The gas bag module according to any of the preceding claims, **characterized in that** the guide means have at least one pin element (20) connected with the central part (18).

5. The gas bag module according to any of the preceding claims, **characterized in that** the deformation means is deformed under mechanical action.

6. The gas bag module according to any of the preceding claims, **characterized in that** the deformation means is deformed under thermal action.

7. The gas bag module according to any of the preceding claims, **characterized in that** the central part (18) includes an emblem.

## Revendications

1. Module de coussin à gaz comportant un générateur de gaz (10), un coussin à gaz (28) se trouvant en liaison d'écoulement avec le générateur de gaz, un couvercle de module recouvrant le coussin à gaz, comportant une partie médiane (18), séparée du couvercle de module après l'ouverture, et un système de retenue (12) pour la partie médiane, le système de retenue présentant des moyens de guidage (14, 20, 22) qui, lors du gonflage du coussin à gaz (28), permettent une translation de la partie médiane (18) et limite la translation de la partie médiane (18), **caractérisé en ce que** le système de retenue (12) présente un moyen de déformation plastiquement déformable et servant d'élément d'espacement (38) qui est déformé de façon permanente lors d'un mouvement de la partie médiane (18) à la suite d'une activation du générateur de gaz (10).

2. Module de coussin à gaz selon la revendication 1, **caractérisé en ce qu'**un tronçon de coussin à gaz (24) est immobilisé au-dessous de la partie médiane (18) et au-dessus du système de retenue (12).

3. Module de coussin à gaz selon l'une des revendications précédentes, **caractérisé en ce que** les moyens de guidage sont réalisés de telle sorte que lors du gonflage du coussin à gaz (28), la partie médiane (18) est déplacée sensiblement dans une direction vers un occupant.

4. Module de coussin à gaz selon l'une des revendications précédentes, **caractérisé en ce que** les moyens de guidage présentent au moins un élément en forme de tige (20) relié à la partie médiane (18).

5. Module de coussin à gaz selon l'une des revendications précédentes, **caractérisé en ce que** le moyen de déformation est déformé sous effet mécanique.

6. Module de coussin à gaz selon l'une des revendications précédentes, **caractérisé en ce que** le moyen de déformation est déformé sous effet thermique.

7. Module de coussin à gaz selon l'une des revendications précédentes, **caractérisé en ce que** la partie médiane (18) présente un emblème.
